Europäisches Patentamt

European Patent Office

Office européen des brevets

(19)

(11) Veröffentlichungsnummer : **0 169 274 B1**

(12) **EUROPÄISCHE PATENTSCHRIFT**

(45) Veröffentlichungstag der Patentschrift :
23.11.89

(21) Anmeldenummer : 84115808.2

(22) Anmeldetag : 19.12.84

(51) Int. Cl.⁴ : **B 23 K   9/12**

(54) **Vorrichtung zum Verschweissen des Deckels und/oder des Bodens mit dem Mantel von Behältern.**

(30) Priorität : 02.02.84 DE 3403541

(43) Veröffentlichungstag der Anmeldung :
29.01.86 Patentblatt 86/05

(45) Bekanntmachung des Hinweises auf die Patenterteilung : 23.11.89 Patentblatt 89/47

(84) Benannte Vertragsstaaten :
BE CH DE FR GB LI SE

(56) Entgegenhaltungen :
EP-A- 0 012 962
EP-A- 0 015 414
DE-A- 3 005 954
US-A- 4 121 746
PATENT ABSTRACTS OF JAPAN, Band 8, Nr. 2 (M-
266)[1439], 7. Januar 1984; & JP-A-58 167 080 (NIPPON
KOKAN K.K.) 03-10-1983
PATENT ABSTRACTS OF JAPAN, Band 8, Nr. 146 (M-
307)[1583], 7. Juli 1984; & JP-A-59 42 182 (HITACHI
ZOSEN K.K.) 08-03-1984

(73) Patentinhaber : **Deutsche Gesellschaft für Wiederaufarbeitung von Kernbrennstoffen mbH
Hamburger Allee 4 Postfach 1407
D-3000 Hannover 1 (DE)**

(72) Erfinder : **Popp, Franz Wolfgang, Dr.
Kuhstrassse 5
D-3002 Wedemark (DE)**
Erfinder : **Geisert, Günter
Waldblick 6
D-6906 Leimen-Gauangelloch (DE)**

(74) Vertreter : **König, Norbert, Dipl.-Phys. Dr. et al
Patentanwälte Leine & König Burckhardtstrasse 1
D-3000 Hannover 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Vorrichtung zum automatischen und/oder fernhantierten Verschweißen des Deckels und/oder des Bodens mit dem Mantel von Behältern zur Aufnahme und Aufbewahrung von radioaktiven Brennelementen und Abfällen in einer heißen Zelle gemäß Oberbegriff des Anspruchs 1.

Radioaktive Stoffe, wie beispielsweise bestrahlte Kernbrennstoffelemente oder in Stahlkokillen eingefüllte, verglaste radioaktive Spaltprodukte, müssen zum Zweck des Transportes und/oder der Lagerung in spezielle Aufnahmebehälter eingebracht werden. Die Aufnahmebehälter haben eine hohe Strahlenabschirmung, eine ausreichende Kühlfläche sowie eine hohe Stabilität. Metallische Aufnahmebehälter gewährleisten einen sicheren Verschluß von radioaktivem Abfall. Die metallischen Aufnahmebehälter sind an einer Stirnseite offen, wodurch eine Aufnahmeöffnung entsteht.

Nach dem Befüllen eines derartigen Transport- und/oder Lagerbehälters mit den bestrahlten Kernreaktorbrennelementen oder dem radioaktiven Abfall wird in die stirnseitige Aufnahmeöffnung ein zylindrischer Verschlußdeckel eingesetzt und dieser mit dem benachbarten Behältermantel verschweißt. Durch den dichten Verschluß des Aufnahmebehälters mit dem dicken, abschirmenden Verschlußdeckel werden die radioaktiven Stoffe sicher von der Biosphäre getrennt.

Aufgrund der Radioaktivität der bestrahlten Kernreaktorbrennelemente muß die Verschweißung des beladenen Behälters in einer sogenannten heißen Zelle vorgenommen werden. Daraus entsteht die Forderung, die Verschweißung fernbedient oder automatisch vorzunehmen. Um eine gute gasdichte Verschweißung der dickwandigen Behälterteile miteinander zu erreichen, wird vorzugsweise das Engspaltschweißverfahren eingesetzt. Durch das Engspaltschweißverfahren entstehen nur geringe Schrumpfspannungen. Größere Schrumpfspannungen führen zu Rißbildungen in der Schweißnaht. Das sogenannte Engspaltschweißverfahren ist besonders für dickwandige Bauteile entwickelt worden, zwischen denen relativ enge Fugen vorhanden sind.

Die GB-PS 14 44 479 zeigt einen Lagerbehälter zur Aufnahme von mit abgebrannten Brennelementen oder radioaktivem Abfall gefüllten Behältern. Der Lagerbehälter wird mit einem zylindrischen Stopfen verschlossen, der mit dem Behältermantel durch Tiefspaltschweißen verschweißt wird. Nähere Angaben zum Schweißvorgang selbst sind dieser Druckschrift nicht entnehmbar.

Die DE-OS 31 38 485 betrifft einen Behälter zur Aufnahme und Aufbewahrung von radioaktiven Stoffen sowie ein Verfahren zum dichten Verschließen des Behälters. Dieser Druckschrift ist entnehmbar, daß die Behälterwand und der Verschlußdeckel miteinander verschweißt werden. Nähere Angaben zur Schweißtechnik sind dieser Veröffentlichung nicht entnehmbar.

Aus der EP-PS 0 012 962 ist ein Verfahren und eine Vorrichtung zum automatischen Verschweißen von Behältern bekannt, die in der Atomindustrie verwendet werden, wobei die Schweißnaht in einer keilförmigen Fuge gelegt wird. Die Schweißelektrode der Vorrichtung wird entlang der Fuge bewegt und unmittelbar durch Höhen- und Seitentaster geführt, die auf den Fugenflanken laufen.

Die erste Schweißraupe der ersten Schweißlage wird gegen eine erste Fugenflanke gelegt. Nach Rückbewegung der Schweißelektrode unter definierter Schrägbewegung auf die andere Flanke zu wird die nächste Schweißraupe um eine Raupenbreite versetzt zur ersten gelegt. Gleichzeitig wird die jeweilige Fugenbreite gemessen zur Ermittlung der Zahl der Schweißraupen zum Füllen der jeweiligen Fugenbreite. Ist eine Schweißlage aus mehreren Schweißraupen gelegt, beginnt der ganze Vorgang wieder von vorn, beginnend mit der ersten Schweißraupe der nächsten Schweißlage an der ersten Flanke bis die gesamte Fuge ausgefüllt ist.

Der vorliegenden Erfindung liegt die Aufgabe zugrunde, eine Vorrichtung der eingangs genannten Art so zu verbessern, daß auch die beim Schweißvorgang erzeugte Schweißschlacke automatisch und/oder fernhantiert beseitigt werden kann.

Diese Aufgabe wird durch die im Kennzeichen des Anspruchs 1 angegebene Ausbildung gelöst.

Vorteilhafte und zweckmäßige Weiterbildungen der erfindungsgemäßen Aufgabenlösung sind in den Unteransprüchen gekennzeichnet.

Durch die Erfindung wird zusätzlich zum automatischen Ablauf des Schweißprozesses beim Verschweißen von Deckel und Behältermantel eine automatische Schweißschlackenentfernung vorgesehen, die mit Hilfe eines schwingend angetriebenen Meißels und schwingend angetriebener Nägel eines Nagelgerätes erfolgt, wie dies in den Ansprüchen 2 und 3 angegeben ist. Das Nagelgerät dient dazu, die vom Meißel nicht erfaßten Schlackenreste restlos zu entfernen. Das Nagelgerät ist dabei so ausgelegt, daß es die gesamte Schweißnahtbreite auf einmal bearbeiten kann. Zur Anpassung an die Oberflächenkontur der Schweißnaht sind die einzelnen Nägel des Nagelgerätes relativ zueinander bewegbar ausgebildet.

Die erfindungsgemäße Vorrichtung ist vorzüglich zum Einsatz in einer sogenannten heißen Zelle geeignet, da sämtliche Bedienungs- und Überwachungsvorgänge vollautomatisch ferngesteuert durchgeführt werden können.

Die Erfindung soll nachfolgend anhand der beigefügten Zeichnung näher erläutert werden.

Es zeigt

Fig. 1 einen Schnitt durch einen Teil eines Deckels und eines Behältermantels, die nach der Erfindung miteinander verschweißt sind,

Fig. 2 schematisch Teile der Vorrichtung zur Durchführung des erfindungsgemäßen Schweißverfahrens und deren relative Anordnung zueinander und zu einer Schweißfuge zwischen Deckel und Behältermantel,

Fig. 3 schematisch weitere Teile der Vorrichtung zur Durchführung des erfindungsgemäßen Schweißverfahrens und deren Anordnung relativ zueinander und im Bereich der Fuge zwischen Deckel und Behältermantel,

Fig. 4 schematisch eine Draufsicht auf einen mit einem zylindrischen Stopfen verschlossenen Behälter, wobei die Lage der einzelnen Bauteile der Vorrichtung zur Durchführung des Verfahrens schematisch mit eingezeichnet sind,

Fig. 5 eine schematische Darstellung der Teile der Gesamtvorrichtung und deren Anordnung relativ zueinander, und

Fig. 6 eine perspektivische schematische Darstellung eines zu verschließenden Behälters, der sich auf einem Drehteller befindet, der die zu verschweißende Fuge zwischen Deckel und Behälter an einer Schweißstation (schematisch dargestellt) vorbeibewegt.

Die Zeichnung zeigt einen Behälter 2 zur Aufnahme von radioaktiven Brennelementen und Abfällen zwecks Lagerung. Der Behälter weist einen Mantel 4 und eine Einfüllöffnung 6 auf, die mit einem Deckel 8 verschlossen ist. Der Deckel hat vorzugsweise die Form eines Stopfens, der mit einem unteren äußeren Ringflansch 10 auf einer inneren Ringstufe 12 des Behältermantels 4 aufliegt. Der Stopfen 8 und der Mantel 4 sind auf ihrer Außenseite bzw. ihrer Innenseite so bearbeitet, daß eine Fuge 14 gebildet wird, über die der Deckel und der Behältermantel miteinander verschweißt werden. Die Fuge 14 stellt einen relativ engen Spalt dar und um über diesen engen Spalt eine zuverlässige Verbindung zwischen Deckel und Behältermantel und sichere Abdichtung zu erzielen, wird das an sich bekannte Engspaltschweißverfahren angewandt. Das Engspaltschweißverfahren ist insbesondere entwickelt worden für enge Fugen und große Querschnitte der zu verschweißenden Teile.

Die Vorrichtung zum Verschweißen des Behälters weist einen Drehteller 16 auf, der motorisch angetrieben wird, sowie eine quasi stationär angeordnete Schweißvorrichtung 18. Die Gesamtschweißvorrichtung 18 besteht aus einer Reihe von Einzelkomponenten, die weiter unten noch näher beschrieben werden. Der Behälter 2 wird auf den Drehteller 16 gestellt und mit Hilfe des Drehtellers an der Schweißvorrichtung 18 so vorbeibewegt, daß die Schweißnaht in der Fuge 14 gelegt werden kann. (Drehrichtung s. Pfeil 19).

Es ist ein automatischer Ablauf des Schweißvorganges vorgesehen. Hierzu ist ein Prozeßrechner 28 vorgesehen, in dem Daten, die die Abmessungen der jeweiligen Schweißfuge, wie beispielsweise Breite, Tiefe, Neigung der Fugenflanke u. a., abgespeichert sind sowie Daten, die den Aufbau der Schweißnaht betreffen, wie Höhe und Anzahl der Schweißlagen, Anzahl der Raupen pro Schweißlage u. ä. Ferner ist ein Taster 20 zur Höhensteuerung vorgesehen, der die Höhe der jeweiligen Schweißlage abtastet und dessen Meßsignale laufend in den Prozeßrechner 28 gegeben werden. Der Prozeßrechner 28 erzeugt in Abhängigkeit von den vorgegebenen, gespeicherten Daten und den Meßsignalen Steuersignale zur Höhen- und Seitensteuerung der Schweißvorrichtung 18.

Um einen eventuellen Radialschlag des auf dem Drehteller 16 stehenden Behälters 2 auszugleichen, ist auf der Oberfläche des Stopfens oder Deckels 8 oder des Mantels 4 des Behälters eine umlaufende Führungsfläche 34 oder eine umlaufende Führungsnut 36 ausgebildet, die zur Führung der Schweißvorrichtung 18 dient. Als entsprechende Führungsfläche kann auch die Außenfläche des Behältermantels dienen, falls diese ausreichend genau bearbeitet ist.

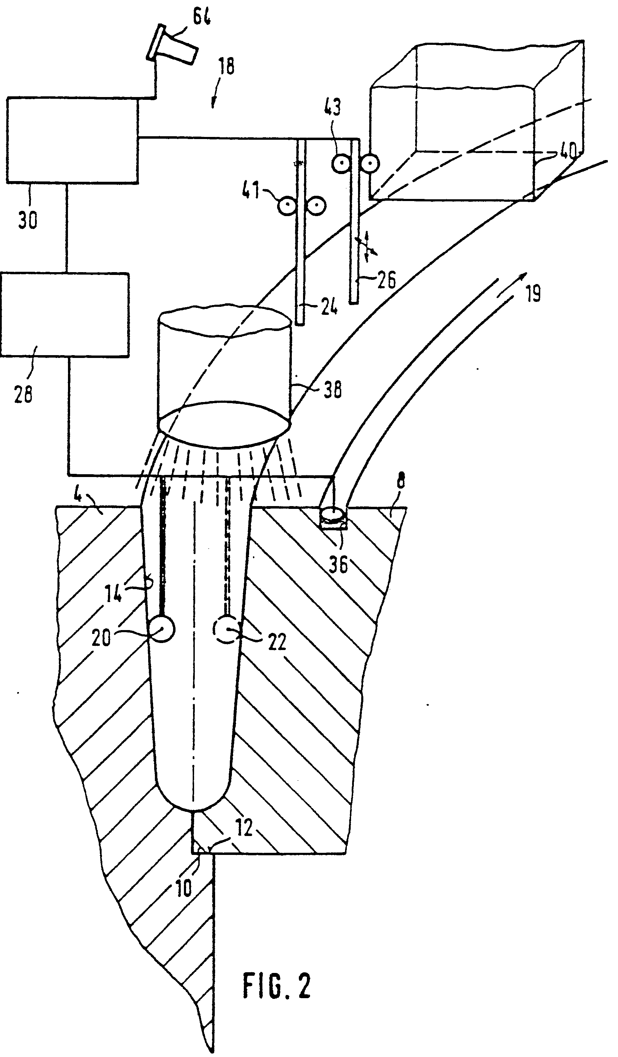

Anstelle fester Vorgaben für die Abmessungen der Schweißfuge kann zusätzlich zum Taster 20 zur Höhensteuerung ein weiterer Taster 22 zur Seitensteuerung des Schweißgerätes 18 vorgesehen werden (gestrichelt in der Fig. 2 dargestellt). Die Meßsignale beider Taster werden im Prozeßrechner entsprechend verarbeitet zur Erzeugung der Steuersignale für die Schweißvorrichtung.

Es sind vorzugsweise zwei getrennt steuerbare Schweißelektroden 24 und 26 vorgesehen als sogenannter Vorlaufbrenner bzw. sogenannter Nachlaufbrenner, wobei der Nachlaufbrenner außer nach hinten auch noch seitlich versetzt zum Vorlaufbrenner 24 angeordnet ist. Der Abstand der beiden Schweißelektroden 24 und 26 quer zur Schweißnahtrichtung ist etwa gleich dem Abstand zweier Schweißraupen, so daß mit Hilfe der beiden Elektroden zwei Raupen 27 zur gleichen Zeit gelegt werden können. Die verschiedenen Schweißlagen 31 und Schweißraupen pro Schweißlage werden mit Hilfe des Sensors zur Höhenabtastung und evtl. mit Hilfe des Sensors zur Flankenseitenabtastung in Abhängigkeit von der jeweiligen Gesamthöhe der Schweißnaht 29 und der Innenkontur der Schweißfuge automatisch gelegt. Die Signale der Taster 20 und 22 werden hierfür einem Prozeßrechner 28 zugeführt, der eine Vorrichtung 30 zur Steuerung der Höhen- und Seitenlage der Elektroden steuert.

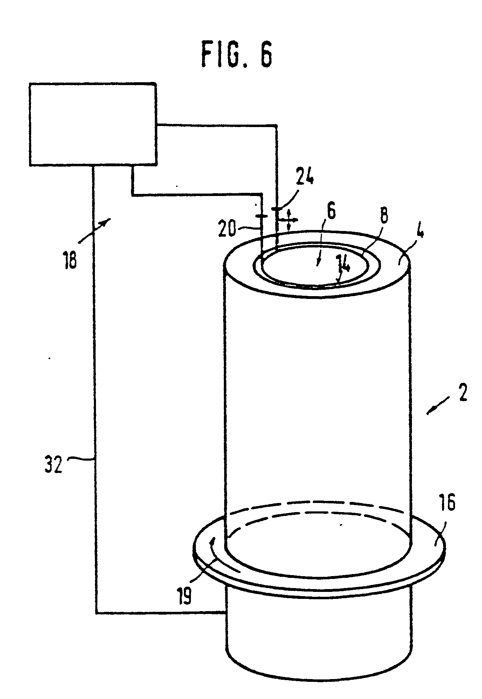

Die Taster können auf kapazitiver oder induktiver Basis arbeiten. Die Seitensteuerung des Tasters 22 gleicht auch den Radialschlag des Behälters aus, der auf dem Drehtisch steht. Die Drehgeschwindigkeit des Drehtisches 16 und damit des Behälters 2 ist mit der Schweißgeschwindigkeit synchronisiert. Die Steuerung der Drehgeschwindigkeit kann durch den Prozeßrechner 28 über eine Leitung 32 erfolgen (vgl. Fig. 6).

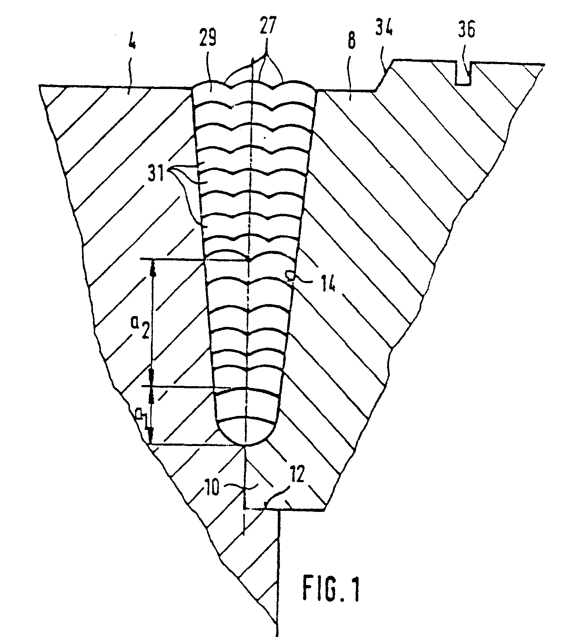

Der Fig. 1 ist entnehmbar, wie in etwa die einzelnen Schweißlagen 31 und Schweißraupen 27 gelegt werden. Entsprechend der jeweiligen Fugenbreite wird im Bereich $a_1$ mit einer Raupe pro Lage begonnen. Nach Erreichen einer bestimmten Breite, beispielsweise zu Beginn des Bereiches $a_2$ wechselt die Schweißanlage automatisch von der Ein-Lagen- in die Zwei-Lagen-Schweißung und nach Durchlaufen des Bereiches $a_2$ automatisch in die Drei-Lagen-Schweißung. Die jeweilige Fugenbreite wird ebenfalls über die Taster und die elektronische Steuereinrichtung ermittelt.

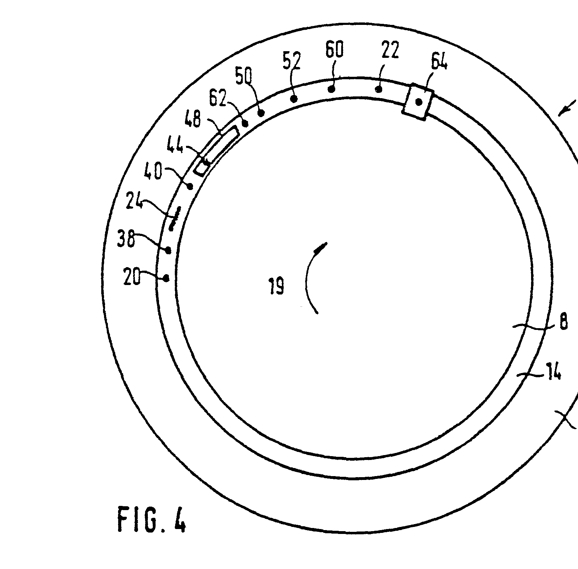

Um das Schweißbad beim Schweißen vor Einflüssen der Atmosphäre, insbesondere vor Sauerstoff und Stickstoff zu schützen, muß unter Schutzgas oder Schweißpulver gearbeitet werden. Vorliegend wird das Unterpulverschweißen vorgezogen, da das Schutzgas keine größeren Strecken über einen längeren Zeitraum abdecken kann und außerdem große Gasmengen verbraucht werden. Immerhin beträgt die Schweißzeit für einen Behälter der vorliegend betrachteten Art etwa 8 bis 10 Stunden. Mit dem Schweißpulver können größere Strecken abgedeckt werden. Außerdem hat die Verwendung von Schweißpulver den Vorteil, daß der Teil des Pulvers, der nicht verbraucht worden ist, im Kreislauf dem Schweißvorgang wieder zugeführt werden kann. Hierzu ist, wobei auf die Fig. 2, 4 und 6 Bezug genommen wird, hinter den Tastern 20, 22 ein Pulverzuführungsrohr 38 vorgesehen, das oberhalb der Schweißfuge 14 und vor den Schweißelektroden 24 und 26 mündet und über das das Schweißpulver dem Schweißbad zuführbar ist. Nicht verbrauchtes überschüssiges Schweißpulver wird durch eine Absaugvorrichtung 40 abgesaugt, die hinter den Schweißelektroden 24, 26 angeordnet ist, und dem Pulverzuführungsrohr wieder zugeführt (nicht dargestellt). Mit den Bezugszeichen 41 und 43 sind in der Fig. 2 an sich bekannte Schweißdrahtvorschubeinrichtungen bezeichnet (schematisch dargestellt).

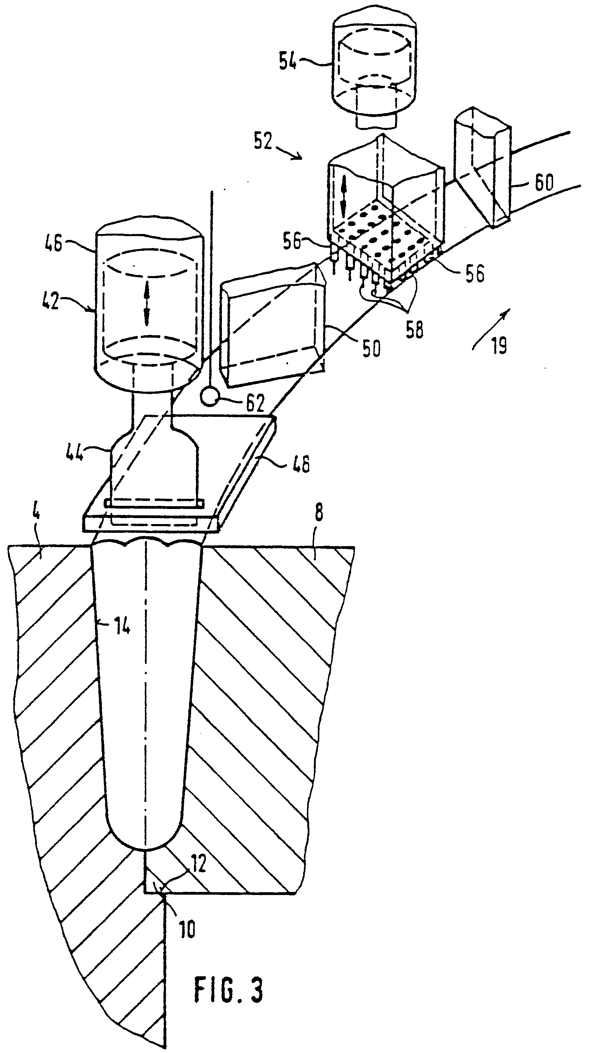

Zur Entfernung der Schlackenschicht ist ein Meißelgerät 42 vorgesehen. Ein Meißel 44 wird über einen Pneumatikzylinder 46 oszillierend betrieben und zertrümmert dabei die auf der Schweißnaht befindliche Schlackenschicht. Um zu verhindern, daß im Arbeitsbereich des Meißels 44 vom Meißel herausgeschlagene Teile herausgeschleudert werden, isteine mechanische Abdeckung 48 vorgesehen, vgl. Fig. 3.

Hinter dem Meißel 44 befindet sich eine Absaugdüse 50 zum Absaugen der durch den Meißel abgeschlagenen Schlackenteile. Diese Absaugdüse ist an eine Unterdruckquelle (nicht dargestellt) angeschlossen.

Da mit dem Meißel 44 nicht sämtliche Schlackenteile entfernt werden können, ist ferner ein Nagelgerät 52 vorgesehen, um auch die letzten Reste der Schlacke entfernen zu können. Dieses Nagelgerät weist einen doppelt wirkenden pneumatischen Zylinder 54 auf, über den mehrere in Führungen 56 verschiebliche Stahlstifte 58 antriebbar sind. Die Stahlstifte sind vorzugsweise in axialer Richtung federnd gelagert zur Anpassung an die Kontur der Oberfläche der Schweißnaht. Hinter dem Nagelgerät 52 ist eine weitere Absaugdüse 60 angeordnet zum Absaugen der durch das Nagelgerät abgeschlagenen Schlackenteile.

Die Absaugdüsen haben einen rechteckigen Eintrittsquerschnitt. Die längere Seite dieses Rechteckquerschnitts ist wenigstens so groß wie die größte Nahtbreite. Abhängig von der Tiefe der Schweißstelle und der an dieser Stelle jeweils vorhandenen Fugenbreite wird die Düse so schräg gestellt, daß die gesamte Fugenbreite bzw. Schweißnahtbreite abgesaugt werden kann. Zur automatischen Schrägstellung der Absaugdüsen 50, 60 können diese durch eine Feder in Querstellung vorgespannt angeordnet sein und die genaue Winkelstellung der Düse kann durch eine Abtastung mit Hilfe eines Tasters 62 sichergestellt werden, der die Flanke der Fuge abtastet.

Nach Vollendung der Schweißnaht kann mit der gleichen Schweißvorrichtung noch eine Auftragsschweißung mit einem korrosionsbeständigen Material vorgesehen werden.

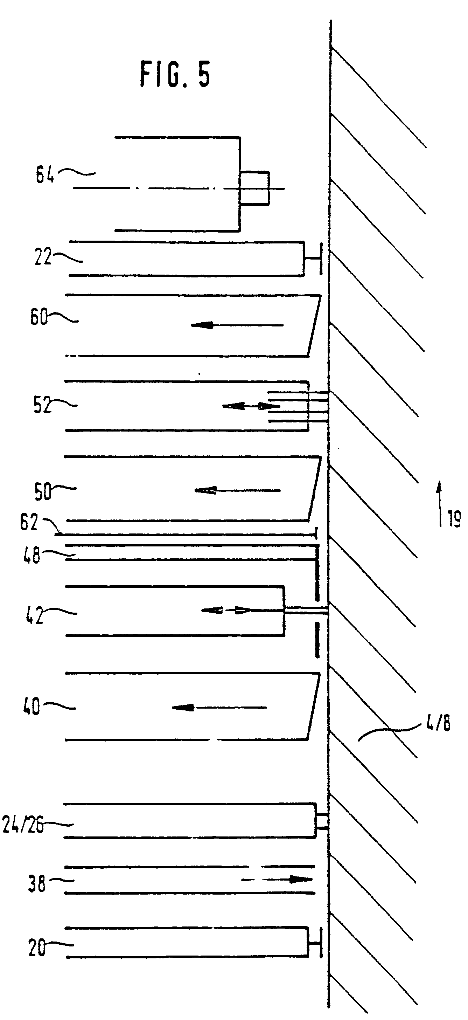

In der Fig. 2 sind die Taster für die Höhensteuerung und Seitensteuerung nebeneinanderliegend eingezeichnet. Die beiden Taster können aber auch hintereinander angeordnet sein, wie dies in der Fig. 5 dargestellt ist. Die Schweißnaht 29 wird optisch beispielsweise mit Hilfe einer an der Schweißvorrichtung 18 befestigten Fernsehkamera 64 kontrolliert.

**Patentansprüche**

1. Vorrichtung zum automatischen und/oder fernhantierten Verschweißen des Deckels und/ oder des Bodens mit dem Mantel von Behältern zur Aufnahme und Aufbewahrung von radioaktiven Brennelementen und Abfällen in einer heißen Zelle, mit einem den Verlauf eines Spaltes zwischen Behältermantel und -deckel bzw. -boden erfassenden Taster, dessen Signale zur Auswertung einer Steuereinrichtung zugeführt sind, die einen dreidimensional bewegbaren Schweißkopf einer Schweißvorrichtung entlang des Spaltes führt zur Erzeugung einer in sich geschlossenen, aus mehreren übereinander und versetzt angeordneten Schweißraupen bestehenden Schweißnaht,
gekennzeichnet durch
eine Vorrichtung (16) zum Aufnehmen und Drehen des Behälters (2) an der Schweißvorrichtung (18) vorbei,
eine angetriebene Vorrichtung (42, 52) zum Lösen der Schweißschlacke von der Schweißnaht sowie
eine Absaugvorrichtung mit einer hinter der Vorrichtung zum Lösen der Schweißschlacke angeordneten Absaugdüse (50) zum Entfernen der gelösten Schweißschlacke.

2. Vorrichtung nach Anspruch 1, dadurch gekennzeichnet, daß die angetriebene Vorrichtung (42, 52) wenigstens einen schwingend angetriebenen Meißel (44) aufweist, hinter dem die Absaugdüse (50) angeordnet ist.

3. Vorrichtung nach Anspruch 2, dadurch gekennzeichnet, daß die angetriebene Vorrichtung (42, 52) zusätzlich wenigstens ein dem schwingend angetriebenen Meißel (44) nachgeordnetes Nagelgerät (52) zum Lösen der vom Meißel (44) nicht erfaßten Schlackenrestteile aufweist und daß eine weitere hinter dem Nagelgerät angeordnete Absaugdüse (60) vorgesehen ist.

4. Vorrichtung nach Anspruch 3, dadurch gekennzeichnet, daß das Nagelgerät mehrere axial geführte und bewegbare Stahlstifte (58) aufweist und eine Arbeitsfläche aufweist, die die gesamte Breite der Schweißnaht überstreicht.

5. Vorrichtung nach Anspruch 4, dadurch gekennzeichnet, daß die Stahlstifte relativ zueinander bewegbar ausgebildet sind.

6. Vorrichtung nach Anspruch 4 oder 5, dadurch gekennzeichnet, daß die Stahlstifte in axialer Richtung elastisch gelagert sind.

7. Vorrichtung nach einem der vorhergehenden Ansprüche, dadurch gekennzeichnet, daß das Meißelgerät (42) und das Nagelgerät (52) druckmittelbetätigt sind.

8. Vorrichtung nach Anspruch 7, dadurch gekennzeichnet, daß der Meißel (44) des Meißelgerätes (42) und die Stahlstifte (58) des Nagelgerätes (52) pneumatisch mit Hilfe eines doppelt wirkenden Zylinders angetrieben werden.

9. Vorrichtung nach Anspruch 2 oder 3, dadurch gekennzeichnet, daß die Absaugdüse (60) einen rechteckförmigen Eintrittsquerschnitt aufweist, dessen längere Seite wenigstens der größten Breite des Spaltes bzw. der Fuge (14) in etwa entspricht und dessen schmalere Seite kleiner ist als die größte Breite des Spaltes bzw. der Fuge (14).

10. Vorrichtung nach Anspruch 9, gekennzeichnet durch eine Steuereinrichtung (62), die die Schrägstellung der Absaugdüsen (50, 60) derart steuert, daß die Eintrittsöffnung der Absaugdüsen zumindest in einer Rechteckdiagonale stets die jeweilige Breite des Spaltes bzw. der Fuge überdeckt.

11. Vorrichtung nach Anspruch 10, dadurch gekennzeichnet, daß die Steuereinrichtung einen die Stellung der Absaugdüse steuernden Taster (62) aufweist, der die Flanken des Spaltes bzw. der Fuge abtastet.

12. Vorrichtung nach einem der Ansprüche 1 bis 11, dadurch gekennzeichnet, daß im Wirkbereich der Vorrichtung zum Entfernen der Schweißschlacke bzw. in Wirkbereich des Meißelgerätes und/oder des Nagelgerätes eine die Schweißfuge abdeckende Abdeckeinrichtung (48) vorgesehen ist.

13. Vorrichtung nach einem der vorhergehenden Ansprüche, dadurch gekennzeichnet, daß Einrichtungen zur optischen Überwachung der Schweißnaht vorgesehen sind.

14. Vorrichtung nach Anspruch 13, dadurch gekennzeichnet, daß die optische Überwachungseinrichtung eine an der nicht umlaufenden Schweißvorrichtung angebrachte Fernsehkamera (64) ist.

15. Vorrichtung nach einem der vorhergehenden Ansprüche, dadurch gekennzeichnet, daß vor dem Schweißkopf (24, 26) ein Schweißpulverzuführungsrohr (38) einer Schweißpulverzuführungseinrichtung und hinter dem Schweißkopf eine Absaugvorrichtung (40) für nicht verbrauchtes Schweißulver angeordnet sind.

16. Vorrichtung nach einem der Ansprüche 1 bis 14, dadurch gekennzeichnet, daß auf dem Deckel oder dem Mantel des Behälters parallel zur Fugenflanke eine als Bezugslinie bzw. -fläche dienende umlaufende Führungsfläche (34) und/ oder Führungsnut (36) ausgebildet sind zur Führung der Schweißvorrichtung (18).

17. Vorrichtung nach Anspruch 16, dadurch gekennzeichnet, daß als Bezugslinie für die Führung der Schweißvorrichtung der Außenumfang des Behältermantels dient.

18. Vorrichtung nach einem der Ansprüche 1 bis 17, dadurch gekennzeichnet, daß ein Prozeßrechner (28) vorgesehen ist, der in Abhängigkeit von fest vorgegebenen Abmessungen der Schweißfuge, vom vorgesehenen Aufbau der Schweißnaht und von den Meßsignalen eines die Höhe der Schweißnaht abtastenden Tasters (20) Steuersignale zur Seiten- und Höhensteuerung der Schweißvorrichtung (18) erzeugt.

19. Vorrichtung nach Anspruch 18, dadurch gekennzeichnet, daß zusätzlich ein Seitentaster (22) für die Abtastung des Verlaufs der Fugenflanke vorgesehen ist.

**Claims**

1. An equipment for automatic and/or remote-controlled welding of the lid and/or the bottom to the shell of containers for the reception and storage of radioactive fuel elements and waste in a hot cell, having a feeler which detects the course of a gap between the container shell and its lid or bottom and the signals from which are fed for evaluation to a control device which guides a three-dimensionally movable welding head of a welding equipment along the gap for the generation of a weld seam which in itself is closed and consists of a number of weld beads arranged one above the other and offset, characterized by a mechanism (16) for receiving and turning the container (2) past the welding equipment (18), a driven mechanism (42, 52) for loosening the welding cinder from the weld seam as well as a suction equipment with a suction nozzle (50) arranged behind the mechanism for loosening the welding cinder, for removing the loosened welding cinder.

2. An equipment as in Claim 1, characterized in that the driven mechanism (42, 52) exhibits at last one chisel (44) having an oscillatory drive, behind which the suction nozzle (50) is arranged.

3. An equipment as in Claim 2, characterized in that the driven mechanism (42, 52) exhibits in addition at least one spike apparatus (52) arranged after the chisel (44) having an oscillatory drive, for loosening the residual parts of the cinder not detected by the chisel (44) and that a further suction nozzle (60) is provided, arranged behind the spike apparatus.

4. An equipment as in Claim 3, characterized in that the spike apparatus exhibits a number of axially guided and movable steel pins (58) and a working area which stretches across the whole width of the weld seam.

5. An equipment as in Claim 4, characterized in that the steel pins are made movable relatively to one another.

6. An equipment as in Claim 4 or 5, characterized in that the steel pins are supported resiliently in the axial direction.

7. An equipment as in one of the preceding Claims, characterized in that the chisel apparatus (42) and the spike apparatus (52) are pressure-medium actuated.

8. An equipment as in Claim 7, characterized in that the chisel (44) of the chisel apparatus (42) and the steel pins (58) of the spike apparatus (52) are driven pneumatically by means of a double-acting cylinder.

9. An equipment as in Claim 2 or 3, characterized in that the suction nozzle (60) exhibits a rectangular inlet cross-section the longer side of which approximately corresponds with at least the greatest width of the gap or join (14) and the narrower side of which is smaller than the greatest width of the gap or join (14).

10. An equipment as in Claim 9, characterized by a control device (62) which controls the oblique positions of the suction nozzles (50, 60) in such a way that the inlet openings of the suction nozzles at least along one rectangular diagonal always overlap the width of the gap or join at the time.

11. An equipment as in Claim 10, characterized in that the control device exhibits a feeler (62) controlling the position of the suction nozzle, which probes the flanks of the gap or join.

12. An equipment as in one of the Claims 1 to 11, characterized in that in the working range of the mechanism for removal of the welding cinder or respectively in the working range of the chisel apparatus and/or the spike apparatus a cover device (48) is provided, covering over the welding groove.

13. An equipment as in one of the preceding Claims, characterized in that devices are provided for the optical monitoring of the weld seam.

14. An equipment as in Claim 13, characterized in that the optical monitoring device is a television comera (64) fitted to the non-revolving welding equipment.

15. An equipment as in one of the preceding Claims, characterized in that before the welding head (24, 26) a welding powder feed tube (38) of a welding powder device is arranged and behind the welding head a suction equipment (40) for unconsumed welding powder.

16. An equipment as in one of the Claims 1 to 14, characterized in that on the lid or the shell of the container in parallel with the flanks of the join a guide face (34) and/or guide groove (36 are made running round to serve as a reference line or face for guidance of the welding equipment (18).

17. An equipment as in Claim 16, characterized in that as the reference line for guidance of the welding equipment the outer periphery of the container shell is used.

18. An equipment as in one of the Claims 1 to 17, characterized in that a process control computer (28) is provided, which in dependence upon fixedly predetermined dimensions of the welding groove, upon a foreseen build-up of the weld seam and upon measuring signals from a feeler (20) probing the height of the weld seam, generates control signals for the lateral and height control of the welding equipment (18).

19. An equipment as in Claim 3, characterized in that in addition a side feeler is provided for probing the course of the flanks of the groove.

## Revendications

1. Dispositif pour le soudage automatique et/ou télécommandé du couvercle et/ou du fond avec le corps de réservoirs pour recevoir et emmagasiner des éléments combustibles et des déchets radioactifs dans une cellule chaude, avec un capteur détectant l'écoulement d'une fente entre le corps et le couvercle ou le fond du réservoir, dont les signaux sont amenés pour dépouillement à un dispositif de commande qui guide une tête de soudage d'un dispositif de soudage, mobile dans trois dimensions, le long de la fente pour former un cordon de soudure fermé sur lui-même constitué de plusieurs chenilles de soudure disposées les unes sur les autres et décalées, caractérisé par un dispositif (16) pour recevoir et faire tourner le réservoir (2) devant le dispositif de soudage (18), un dispositif entraîné (42, 52) pour séparer le laitier de soudure d'avec le cordon de soudure, ainsi qu'un dispositif d'évacuation par aspiration avec une buse d'aspiration (50) disposée derrière le dispositif pour séparer le laitier de soudure afin de séparer le laitier de soudure dissous.

2. Dispositif selon la revendication 1, caractérisé en ce que le dispositif entraîné (42, 52) présente au moins un ciseau (44) entraîné en oscillation derrière lequel est disposée la buse d'aspiration (50).

3. Dispositif selon la revendication 2, caractérisé en ce que le dispositif entraîné (42, 52) présente additionnellement au moins un appareil à clous (52) disposé après le ciseau (44) entraîné en oscillation pour séparer les parties résiduaires de laitier non saisies par le ciseau (44) et qu'une buse d'aspiration (60) supplémentaire, disposée derrière l'appareil à clous, est prévue.

4. Dispositif selon la revendication 3, caractérisé en ce que l'appareil à clous présente plusieurs pointes d'acier (58) mobiles et guidées axialement, et une surface de travail qui balaye toute la largeur du cordon de soudure.

5. Dispositif selon la revendication 4, caractérisé en ce que les pointes d'acier sont formées mobiles les unes par rapport aux autres.

6. Dispositif selon la revendication 4 ou 5, caractérisé en ce que les pointes d'acier sont montées élastiquement en direction axiale.

7. Dispositif selon l'une des revendications précédentes, caractérisé en ce que l'appareil à ciseau (42) et l'appareil à clous sont actionnés par pression.

8. Dispositif selon la revendication 7, caractérisé en ce que le ciseau (44) de l'appareil à ciseau (42) et les pointes d'acier (58) de l'appareil à clous (52) sont entraînés pneumatiquement à l'aide d'un vérin à double effet.

9. Dispositif selon la revendication 2 ou 3, caractérisé en ce que la buse d'aspiration (60) présente une section d'entrée rectangulaire dont le grand côté correspond sensiblement à la plus grande largeur de la fente ou du joint (14) et dont le petit côté est plus petit que la plus grande largeur de la fente ou du joint (14).

10. Dispositif selon la revendication 9, caractérisé par un dispositif de commande (62) qui commande la position inclinée des buses d'aspiration (50, 60) de telle manière que l'ouverture d'entrée des buses d'aspiration recouvre toujours la largeur correspondante de la fente ou du joint selon une diagonale d'un rectangle.

11. Dispositif selon la revendication 10, caractérisé en ce que le dispositif de commande présente un capteur (62) commandant la position de la buse d'aspiration, qui détecte les flancs de la fente ou du joint.

12. Dispositif selon l'une des revendications 1 à 11, caractérisé en ce qu'un dispositif de protection (48) recouvrant le joint de soudure est prévu dans la zone d'action du dispositif pour séparer le laitier de soudure ou dans la zone d'action de l'appareil à ciseau et/ou de l'appareil à clous.

13. Dispositif selon l'une des revendications précédentes, caractérisé en ce que des dispositifs pour la suveillance optique du cordon de soudure sont prévus.

14. Dispositif selon la revendication 13, caractérisé par le fait que le dispositif de surveillance optique est une caméra de télévision (64) montée sur le dispositif de soudage non circulant.

15. Dispositif selon l'une des revendications précédentes, caractérisé en ce qu'un tube d'amenée de poudre de soudure (38) d'un dispositif d'amenée de poudre de soudure est disposé devant la tête de soudage (24, 26) et un dispositif d'évacuation par aspiration (40) pour la poudre de soudure non consommée est disposé derrière la tête de soudage.

16. Dispositif selon l'une des revendications 1 à 14, caractérisé en ce qu'une surface de guidage (34) et/ou une rainure de guidage (36) servant de ligne ou de surface de référence est formée sur le couvercle ou le corps du réservoir parallèlement aux flancs de joint, pour le guidage du dispositif de soudage (18).

17. Dispositif selon la revendication 16, caractérisé en ce que la périphérie extérieure du corps de réservoir sert de ligne de référence pour le guidage du dispositif de soudage.

18. Dispositif selon l'une des revendications 1 à 17, caractérisé en ce qu'est prévu un calculateur industriel (28) qui émet des signaux de commande, pour la commande latérale et en hauteur du dispositif de soudage (18), en fonction de dimensions fixes prédéterminées du joint de soudure, de la construction prévue du cordon de soudure et des signaux de commande d'un capteur (20) détectant la hauteur du cordon de soudure.

19. Dispositif selon la revendication 18, caractérisé en ce qu'est prévu additionnellement un capteur latéral (22) pour la détection de l'étendue du flanc de joint.

FIG. 1

FIG. 2

FIG. 3

FIG. 4

# FIG. 5

FIG. 6